# EUROPEAN PATENT APPLICATION

(11) **EP 4 831 105 A1**
(43) Date of publication of application: **28.10.2026**
(21) Application number: 25171852.4
(22) Date of filing: 23.04.2025
(51) Int. Cl.: B66C 1/10, F03D 13/10, F03D 80/00, B66C 23/20

(54) **GUIDANCE SYSTEM, WIND TURBINE AND METHOD FOR MOVING A LOAD AND FOR OPERATING A WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

A guidance system for guiding a load (2) within an interior space (3) of a nacelle (4) and/or a hub (5) of a wind turbine (6), when the load (2) is attached to a crane (7) within the interior space (3), in particular via a rope (8) of the crane (7) and/or a connector (9) of the crane (7) that is attached to the rope (8), the guidance system (1) comprising
at least one tagline (10-12), which is attached or attachable to the load (2) and/or the rope (8) of the crane (7) and/or the connector (9) of the crane (7) to guide the load (2), and,
the guidance system further comprising, a respective tensioning member (13-15) for at least one of the taglines (10-12), which is attached or attachable to the respective tagline (10-12) and designed to exert a pulling force on the respective tagline (10-12), and/or,
a respective deflection member (16, 17) for at least one of the taglines (10-12), in particular a pulley, for deflecting the respective tagline (10-12).

## Description

### FIELD OF THE INVENTION

The present disclosure is in the general field to a crane system for transporting a load within an interior space of a nacelle and/or a hub of a wind turbine. Additionally, the invention relates to a wind turbine and to a method for moving a load and a method for operating a wind turbine.

### BACKGROUND

When constructing and/or a servicing a wind turbine, it is often necessary, to move components, e.g., pitch cylinders or motors, components of the generator, power converters and/or switch gear, or other loads, in particular tools, to certain positions within the nacelle or the hub and/or to remove previously installed components.

It is known, to support workers in this manual movement of loads by suspending the load from crane system. It is, however, desirable, to further support workers, while constructing and/or servicing a wind turbine.

The invention is therefore based on the objective of providing an improved approach to moving loads within an interior space of a nacelle and/or a hub of a wind turbine, in particular to reduce the cost and/or effort of constructing and/or a servicing the wind turbine.

### SUMMARY

According to an aspect of the disclosure, a guidance system for guiding a load within an interior space of a nacelle and/or a hub of a wind turbine is provided, when the load is attached to a crane within the interior space, in particular via a rope or cable of the crane and/or a connector of the crane that is attached to the rope, the guidance system comprising
at least one tagline, which is attached or attachable to the load and/or the rope of the crane and/or the connector of the crane to guide the load, and,
the guidance system further comprising a respective tensioning member for at least one of the taglines, which is attached or attachable to the respective tagline and designed to exert a pulling force on the respective tagline, and/or,
a respective deflection member for at least one of the taglines, in particular a pulley, for deflecting the respective tagline.

The guidance system can in particular comprise the crane. The crane can be installed or installable in the interior space. It is, e.g., possible to only install the guidance system, including the crane, when a load is to be guided, and reuse it for a different wind turbine afterwards. Alternatively, the crane can be a separate component from the guidance system, e.g., when the crane is permanently installed in the interior space, while the guidance system is only temporarily installed.

In recent years the power and size of typical wind turbines, in particular of offshore wind turbines but also of onshore wind turbines, has increased significantly. Accordingly, it is quite common, to use a rather large nacelle, e.g. a nacelle that extends for more than 8 m, e.g. for 12 m, in the axial direction of the wind turbine and, e.g., a height of more than 4 m. While this seemingly compounds the challenge of moving loads within the interior space, since loads will potentially need to be transported for longer distances and/or along more complex pathways, it was found, that this challenge can in principle be overcome by using a crane within the interior space.

The use of a crane within such an interior space to move loads seems counterintuitive at first, since a load that is supported by crane can swing, when the crane is moved. This is particularly problematic, when the nacelle itself can move strongly, e.g., in the case of a floating wind turbine. A swinging load within the interior space would however cause a potential hazard for workers and equipment within the interior space.

It was however found that this issue can be remedied by the use of one or more taglines. This is surprising solution, since the use of taglines within an interior space of a nacelle an/or a hub seems hardly possible at first. While the use of taglines to stabilize a load suspended from a crane outside of the wind turbine is well known, the use of manually operated taglines requires an extended free space on all sides of the load, towards which a force is to be exerted by the taglines. Additionally, tensioning members that are currently used in the context of wind turbine construction and servicing to avoid the need of a manual handling of each tagline are rather large and heavy and are therefore not suitable for a use in the typically rather cramped interior of the nacelle.

Hence, since the access to the interior of the nacelle and the hub from the outside is typically limited and since the interior space is typically rather densely populated by equipment, the way to manually move such loads within the interior space is improved and rendered more safely.

Concerning the use of tensioning members, it was however found, that tensioning members with a surprisingly low power can be used to guide loads in the interior space of the nacelle an/or the hub. It is, e.g., possible, to use an electrical winch as a tensioning member, wherein of the power of the winch can be below at 2 kW and in particular below 1 kW or even below 500 W. It was found, that this low power requirement is caused on the one hand by the relatively short maximum extension of the rope of the crane within the nacelle and on the other hand by the fact, that the loads handled within the nacelle are quite a bit lower the loads that typically need to be handled by an exterior crane during the construction and/or servicing of the wind turbine. While such exterior cranes are often used to lift loads of more than 50 tons, sometimes even more than a thousand tons, and therefore needed a very powerful guiding system to guide such loads, loads that need to be moved within the nacelle are typically in the range between 30 kg to 2000 kg. The respective tensioning member can therefore, e.g., have a similar size and power as a common hand-held tool, e.g., a handheld power drill. Due to the low weight and size of such a tensioning member, it can easily be arranged within the interior space, without the need for an extended free space in the vicinity of the load.

Since the interior space is enclosed, the canopy of the nacelle and/or structural elements of the nacelle can be used to support deflection members that allow a pulling force to be redirected. This allows a pulling force to be exerted in a direction, in which there is only a limited free space, that might not be sufficient, to place a tensioning member or a person pulling the tagline within that space. The respective deflection member can, e.g., be or comprise at least one pulley and/or at least one deadeye.

It can be advantageous, to locally reinforce the canopy of the nacelle to create hardpoints for robustly supporting the respective tensioning member and/or deflection member.

This description mostly uses a local coordinate system that is affixed with respect to the nacelle when discussing directions, sizes, etc. The axial direction extends in parallel to the rotational axis of the rotor of the wind turbine. It can run at an angle to the horizontal plane and can, in particular, be parallel to the floor of the nacelle. The height direction of the nacelle is orthogonal to the axial direction and would coincide with the vertical direction in a global coordinate system, when the axial direction would be tilted into the horizontal plane. The width direction is orthogonal to both, the axial direction and the height direction. In some instances, a global coordinate system defined by the vertical direction and the horizontal plane, will be used, e.g., when describing the tilt of the tower of a floating wind turbine. The vertical direction coincides with the direction of gravity.

The tensioning members can, e.g., be located in a common position, e.g., be formed as a module and/or be attached to the crane. The tag lines can then be routed via a respective pulley or other deflection members that is spaced apart from the common position and apart from each other, such that different taglines and are therefore different tensioning members exert pulling force is different directions on the load. Alternatively, the separate tensioning members can, e.g., be arranged on different sides of the load.

According to an embodiment, the guidance system additionally comprises a control unit, that is configured to acquire sensor data concerning an actual movement and/or an actual spatial pose of the load and/or the nacelle respectively, and to control at least one of the tensioning members and/or the crane based on the acquired sensor data.

In particular, all tensioning members can be controlled based on the sensor data. By controlling the tensioning members and optionally the crane, and therefore the forces acting on of the load, based on the sensor data, it is, e.g., possible to implement an active dampening and/or a suppression of a swinging or oscillation of the load and/or a closed loop control of the spatial pose of the load with respect to the nacelle. This can lower of the risk of a collision of the load with the structure of the interior space and with personal and/or equipment in the interior space. The sensor data can, in particular, be acquired via at least one sensor of the guidance system and/or via a communication interface that is configured to communicate with a controller of the wind turbine.

The movement and/or the spatial pose of the load within the local coordinate system of the nacelle could in principle be controlled without taking the movement and/or spatial pose of the nacelle into account. A strong tilting of the wind turbine, that can, e.g., occur in floating wind turbines, can however strongly influence the spatial pose and movement of the load, since it can impose strong inertial pseudo-forces acting on the load and a notable change of the direction, in which gravity acts on load within the local coordinate system of the nacelle. By directly taking the movement and/or an actual spatial pose of the nacelle into account, e.g. via data provided by the controller of the wind turbine concerning tilt of a tower and therefore of the nacelle of a floating wind turbine, the feedback loop for compensating such forces can be shortened and the guidance of the load can therefore be improved.

For completeness's sake, it should be noted, that it would also be possible, to only use sensor data concerning the spatial pose and/or movement of the nacelle, e.g., to only compensate for a tilting of the tower of a floating wind turbine.

According to an embodiment, the sensor data is or comprises image data, in particular image data acquired by a camera, a 3D-scanner and/or a LIDAR-System, and/or measurement data of at least one acceleration sensor attached to the load and/or the rope and/or the connector of the crane and/or an angle sensor measuring an angle of the rope of the crane.

The sensor or at least one of the sensors acquiring the image data can be attached to the nacelle. The spatial pose of the load with respect to the nacelle can then be determined from the image data, in particular when the image data comprises a depth information and/or when image data from multiple image sensors is used. By evaluating image datasets acquired at multiple points in time, a movement of the load, in particular with respect to the nacelle, can be determined.

While an evaluation of image data can allow for an accurate determination of the spatial pose, that can, in particular, take into account all possible degrees of movement, the image acquisition rate and the relatively complex processing required for image evaluation creates a certain amount of latency in the pose a determination and especially in the movement determination.

By using an acceleration sensor as an additional or alternative source of information, it is in particular possible, to quickly and robustly determine the orientation of the global vertical direction with respect to the acceleration sensor by measuring the direction of the gravitational acceleration. Measurement data from an acceleration sensor can therefore, in particular, be used to dampen a swinging motion of the load and/or to compensate for tilting of the nacelle.

An angle sensor measuring an angle of the rope of the crane can e.g. be implemented by determining the distance of a guiding ring guiding the rope at a position between a pulley of the crane and the load and a sensor in a fixed position on the crane arm, e.g. by using a magnetic sensor. In typical usage situations, the angle of the rope will at least approximately correspond to the tilt angle of the load.

The sensor data can comprise a tilt information concerning a tilt of a tower of the wind turbine carrying the nacelle and/or of the nacelle. The tilt information can be acquired via the communication interface of the control unit from a controller of the wind turbine and/or by a sensor, e.g., an acceleration sensor, attached to the nacelle or the tower. The acceleration sensor can in particular measure an acceleration in two or three directions and can therefore, e.g., be used to identify the direction of gravity which coincides with the vertical direction.

The change of the direction of the gravitational force and the pseudo-forces caused by the inertia of the load when the tower is tilting are one of the major concerns, when guiding the load in the interior space of a nacelle or hub of a floating offshore wind turbine. By directly detecting the orientation and/or movement of the tower or the nacelle, the latency of the control loop for compensating these effects can be lowered, therefore further improving the guidance of the load.

Additionally or alternatively, the tilt information can be combined with the previously mentioned measurement data of an acceleration sensor attached to the load and/or the rope and/or the connector of the crane. As already discussed, such an acceleration sensor allows for an at least partial determination of the spatial pose of the load in a global coordinate system. The additional use of the tower information allows a transfer of this pose information into the local coordinate system of the nacelle, which in turn allows for a control of the spatial pose of the load in the local coordinate system of the nacelle.

The control unit can be configured to determine a respective measure for a current or predicted acceleration of the load based on the sensor data, and to control the tensioning member or at least one of the tensioning members to at least partially compensate that force in at least one mode of operation of the control unit.

During the typical operation of a tagline system, the pulling forces of the taglines will typically be chosen to compensate each other, when the load is centered below the crane. In the discussed mode of operation, such a balance of pulling forces can be broken, to actively compensate an acceleration due to external forces acting on the load. Such external forces can, e.g., be present, when a tower of the floating wind turbine and therefore the nacelle is a tilted, in particular due to wind, waves and/or a breaking or accelerating of the rotor of the wind turbine, and/or due to inertial forces when actuating the crane and/or due to the gravity, when the rope of the crane is deflected from the vertical position.

Once the acceleration of the load is known, it can be at least partially compensated by adding an offset to the pulling force exerted by at least one of the tensioning members. In principle, the component of the acceleration that is anti-parallel to the respective tagline or the section of the respective tagline extending between the load or the rope or the connector and the respective deflection member, can be calculated and divided by the mass of the load to determine the increase of the pulling force for the respective tensioning member. According to an embodiment, in order to avoid an overcompensation, that could lead to an oscillation of the load, a slightly lower pulling force is used, e.g., by scaling the offset and/or of the overall pulling force by a scaling factor between zero and one.

Since the acceleration of the load can be measured and/or predicted, before there is an actual notable deflection of the rope and therefore the load, a fast compensation of forces can minimize the actual deflection of the load due to external forces. Such an approach is therefore, in particular, useful, to compensate external forces that change relatively fast, e.g., on a time scale of a few seconds, e.g., due to waves or due to gusts of wind or due to inertial forces.

The measure for the current or predicted acceleration can be directly measured with an acceleration sensor attached to the load. Alternatively or additionally, such an acceleration can be predicted based on tilting of the tower and/or the nacelle, in particular based on the tilt information, and/or based on an evaluation of a sequence of images, and therefore in particular based on the image data.

The control unit can be configured to determine a measure for a current tilt angle of the load based on the sensor data, and to control the tensioning member or at least one of the tensioning members based on an angular error between the current tilt angle and a given reference tilt angle in the mode of operation and/or in at least one further mode of operation of the control unit.

A control based on such an angular error is, in particular, advantageous, when a slow or an at least approximately static tilting of the nacelle is to be compensated. Such a tilting can, e.g., occur in a floating offshore wind turbine, when an approximately constant, strong wind is present. The angular error can, e.g., be used as the error signal in a control loop using a proportional and/or integral and/or differential control of the pulling force respective tensioning member.

In a first exemplary embodiment for such a compensation, the measure for the current tilt angle can be determined in the coordinate system of the nacelle, e.g., by evaluating the previously discussed image data. The measure for the current tilt angle can then, e.g., be determined with respect to the height direction of the nacelle, which can also be used as the reference tilt angle. in this case in the measure for the current tilt angle can be directly used as the angle error.

In a different exemplary embodiment, the measure for the current tilt angle of the load can be determined in absolute coordinates, e.g., relative to the vertical direction. The measure for the current tilt angle can, in this case, be determined relative to the direction of gravity, which can, e.g., be determined based on measurement data from the acceleration sensor attached to the load or the connector or the rope, as discussed above. The reference tilt angle can then, e.g., be given by the tilt information, to ensure, that the load is held essentially parallel to the height direction of the nacelle, even when the nacelle is tilted. This can, in particular, be relevant, when a load is to be aligned with a service gate opening or with equipment installed in the nacelle.

It should be noted, that different choices of the reference tilt angle are also possible, e.g., to deliberately tilt the load with respect to the nacelle, e.g., when moving it through a narrow area in the interior space. it is also possible, to vary the reference tilt angle over time, in particular in synchronization with a movement path of the crane, to move the load through a given sequence of the spatial poses.

In principle, both the measure for the current tilt angle and the current or predicted acceleration can be evaluated in the same or even in the only mode of operation of the control unit. It can however be advantageous, to use separate modes of operation for a control based on the measure for the current tilt angle and for the control based on the current or predicted acceleration or to use a different weighting of these two control paths in different modes of operation. The selection of the mode of operation can then be performed manually by a user or automatically. The selection can, e.g., be based on the task at hand, e.g., based on what type of load is to be moved, and/or on the climatic conditions.

According to an embodiment, the control unit is configured to stop a movement of the crane and/or to stop an increase of a pulling force of the respective tensioning member, when the sensor data and/or additional sensor data acquired by at least one personal and/or obstacle sensor and/or at least one operational parameter of the respective tensioning member indicates a presence of personal and/or of an obstacle in a given operational area of the interior space. This feature can help to avoid a collision of the load with personal and equipment and/or it can limit the force that is exerted on personal or equipment that is on contact with the load.

The operational area can, in particular, correspond to or comprise a planned movement path of the load and/or the vicinity of the load and/or the vicinity of the planned movement path. The operational area can, therefore, be defined by adding a safety margin of, e.g., a safety margin between 20 cm and 3 m, to the volume and/or the expected swept area of the load. It is also possible, to define the operational area by defining a given operational volume below a specific part of the crane, e.g., below the end of a crane arm or below a pulley of the crane guiding the rope. The operational volume can, in particular, correspond to an expected worst-case movement of the load. The operational volume can, in particular, be a cylinder, a cone or a frustrum of a cone. The operational area can then, e.g., be defined as the area swept by the operational volume, when the specific part of the crane is swept along a planned movement path.

The detection can in particular be based on image data that is acquired as the sensor data or as part of the sensor data and/or as additional sensor data. In particular image data comprising depth information and/or image data from multiple image sensors can be used, to allow for a determination of the position of relevant obstacles and/or personal in three dimensions. Sensors that are well suited for the detection of personal and/or equipment are cameras, ultraviolet sensors, infrared sensors, laser based distance sensors, 3d-scanners and ultrasound sensors.

An evaluation of an operational parameter of the respective tensioning member, e.g., of a motor current of an electric winch, can, e.g., be useful to limit the maximum applied force, when a reference tilt angle is used for the control of the tensioning member, as discussed above, while the movement is blocked by an obstacle, before the reference tilt angle is reached.

The guidance system can comprise an interface device. In this case, the control unit can be configured to output an instruction message and/or a warning message to a user of the guidance system via the interface device. The instruction message can, in particular, concern a recommended configuration of the taglines and/or the respective tensioning member and/or the respective deflection member. The warning message can, in particular, be given, when a movement of the load to a given target position is not possible in the current climatic conditions.

While of the use of the discussed guidance system can extend the climatic conditions, e.g., the state of the see and the wind speed, under which certain operations are possible, the operational limits and the optimal use of the guidance system can be hard to judgment for aa user. These issues can be overcome by automatically providing relevant instructions and/or warnings.

The content of the instruction message and/or the decision, whether a warning message is given, can, in particular, depend on a virtual simulation of the movement. It is, e.g., possible to use models of the interior space and the load and to model worst case effects of the current climatic conditions. The climatic conditions can, e.g., be provided by local sensors and/or by a service provider, e.g., be recalled from a server.

In the simplest case, a fixed configuration of the taglines and/or the at least one tensioning and/or deflection member can be used to move the load. This fixed configuration can, e.g., be determined by experts for a specific construction and/or servicing task and can be replayed as instruction message for this task. Alternatively, the configuration can be determined by the simulation, e.g., by performing simulations for different configurations and choosing the configuration, that optimizes a given cost function under certain boundary conditions. The optimization can, e.g., take the time requirement for the task and safety margins into account.

Such a simulation can, additionally or alternatively, be used to determine, whether a desired movement path can be achieved within given power limits of the respective tensioning member in the given climate conditions.

The configuration can, in particular, describe, where a given taglines is to be attached to the load and/or the connector and/or of the rope of the crane, and/or which tensioning member and/or deflection member should be used for which tagline and/or where, e.g., at which respective hardpoint of the canopy of the nacelle, each tensioning member and/or deflection member should be mounted.

It is, in particular, possible that the configuration of the taglines and/or the respective tensioning and/or deflection member is to be changed, once an intermediate position of a planned movement path of the load is reached. The load can in particular be lowered to a floor of the nacelle to reach the intermediate position and the tension of the tensioning members can be released. The instruction message concerning the new configuration can then be automatically given via the interface device, once the intermediate position is reached.

It is, in particular, possible, that the movement between the starting position and a target position of load is automatically controlled by the control unit. The automatic control can, e.g., be supervised by personal operating a watchdog switch to enable the continued operation. The automatic operation can be suspended in the respective intermediate position, until the configuration is adjusted, and the new configuration is confirmed by a user input.

The interface device can, e.g., be a tablet-PC or another mobile communication device, that is in wireless or wired communication with the control unit.

The inventio also concerns a wind turbine comprising a tower having a longitudinal axis, a nacelle being mounted rotatably about a longitudinal axis of the tower to the tower, a rotor having at least one rotor blade, the rotor being rotatably supported by the nacelle, a generator being rotatable by the rotor for generating electrical energy, and the guidance system according to the present invention.

Advantages of the use of the discussed guidance system in a wind turbine where already discussed. Any features discussed in the context of the guidance system according to the present invention can be transferred to the wind turbine according to the present invention to achieve of the discussed advantages and vice versa.

The wind turbine can, in particular, comprise a sensor, in particular an acceleration sensor, in particular mounted to the nacelle or the tower, and a controller. The controller can be configured to determine the or a tilt information concerning a tilt of the tower and/or of the nacelle based on output data of the sensor and can comprise a communication interface for providing the tilt information to the control unit of the or a control unit of the guidance system.

Additionally, the invention concerns a method for moving a load within an interior space of a nacelle and/or a hub of a wind turbine, comprising the following steps:
providing the load in the interior space;
attaching at least one tagline to the load and/or to a rope of the crane and/or to a connector attached to the rope, while the load is attached to a crane that is installed within the nacelle and/or before the load is attached to the crane; and
moving the load within the interior space by actuating the crane, while the load is guided by exerting a pulling force on the respective tagline.

The movement of the load can, in particular, be used as a part of a method for constructing and/or servicing a wind turbine, wherein the load can, e.g., be a component that is to be installed in the wind turbine or that is to be uninstalled from the wind turbine and/or a tool used during the construction and/or servicing.

In particular, guidance system according to the present invention can be used to guide the load in the method according to the present invention. Additionally or alternatively, any features discussed the context of the guidance system and/or the wind turbine according to the present invention can be transferred in the inventive method to achieve the discussed advantages and vice versa.

According to an embodiment, at least one of the taglines is attached to a respective tensioning member mounted within the interior space, wherein the pulling force on the respective tagline is exerted by the respective tensioning member.

Additionally or alternatively, at least one of the taglines can be deflected by a respective deflection member, wherein the respective pulling force is exerted on a section of the respective tagline that is separated from the load by the deflection member, causing the deflection member to redirect the pulling force.

As already discussed in the context of the guidance system according to the present invention, the use of at least one tensioning and/or deflection member can notably improve the guidance and ease the use of the taglines in the, often crammed, interior space of the nacelle an/or a hub.

The step of moving the load within the interior space can, in particular, comprise the sub-steps of
moving the load to an intermediate position,
modifying a configuration of at least one of the taglines and/or at least one tensioning and/or deflection member, while the load is in the intermediate position, and
continuing to move the load from the intermediate position.

A desired movement path for the load can be rather complex. It is therefore possible, that certain mounting positions of tensioning and/or deflection members and/or certain connection points of the taglines to the load, the crane and/or the connector can be well-suited for a guidance of the load along a first part of the movement path, but illsuited or even impossible to use for a second part of the movement path. It can therefore be advantageous, to adjust the configuration of the taglines and/or the tensioning and/or deflection members as needed.

As previously discussed, instructions can be given to personal that is monitoring and/or assisting the movement of the load, to instruct the personal how to modify the configuration of the taglines and/or the tensioning and/or deflection members. These instructions can, in particular, be generated by the control unit of the guidance system discussed above and be provided via the interface device, e.g., via a Tablet-PC carried by the personal.

In particular the load can be lowered to the floor in the intermediate position. Afterwards the tension on the taglines can be released or at least lowered, to allow for an easy connection and/or disconnection of the taglines and/or for a change of the routing of the taglines.

The step of modifying the configuration of the taglines can, e.g., comprise the connection of at least one of the taglines to a different tensioning member than before and/or a routing of at least one of the taglines via a different one of the deflection members as before, and/or a disconnection of at least one of the taglines from the load and/or from the connector and/or from the rope of the crane, and/or a connection of a previously unconnected tagline to the load and/or to the connector and/or the rope of the crane and/or a changing of a position, at which at least one of the taglines is connected to the load and/or to the connector and/or the rope of the crane.

The step of modifying of the configuration of at least one tensioning and/or deflection member can, in particular, comprise a change of the mounting position, at which the respective tensioning and/or deflection member is mounted in the interior space, e.g., a movement of the respective member from one hardpoint of the canopy of the nacelle to a different hardpoint.

The step of continuing to move the load can in particular comprise a movement to at least one further intermediate position, in which a further modification of the configuration of at least one of the taglines and/or at least one tensioning and/or deflection member is performed and/or a movement of the target position.

The invention also concerns a method for operating a wind turbine, in particular an offshore wind turbine, further in particular a floating offshore wind turbine, and/or for feeding electrical and/or chemical energy to an electricity and/or chemical grid, the method comprising the following steps:
operating a wind turbine, wherein the wind turbine is an embodiment of the wind turbine according to the present invention and/or is constructed and/or serviced using the method for moving a load according to the present invention and/or using a guidance system according to the present invention;
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above, for example the presence of a controller that is configured to determine a tilt information concerning a tilt of the tower and/or of the nacelle to control the guidance of the load in the wind turbine according to the present invention and the modification of the configuration of at least one of the tensioning members in the method according to the present invention, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

It has to be noted that embodiments of the invention have been described with reference to different subject matters. In particular, some embodiments have been described with reference to apparatus type subject matter, such as the guidance system and the wind turbine, whereas other embodiments have been described with reference to method type subject matter, such as the method for moving a load and the method for operating a wind turbine. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 schematically shows an exemplary embodiment of the wind turbine according to the present invention comprising an exemplary embodiment of the guidance system according to the present invention,
Fig. 2 discloses a flowchart of an exemplary embodiment of the method for moving a load according to the present invention, and
Fig. 3 discloses a flowchart of an exemplary embodiment of the method operating a wind turbine according to the present invention.

### DETAILED DESCRIPTION

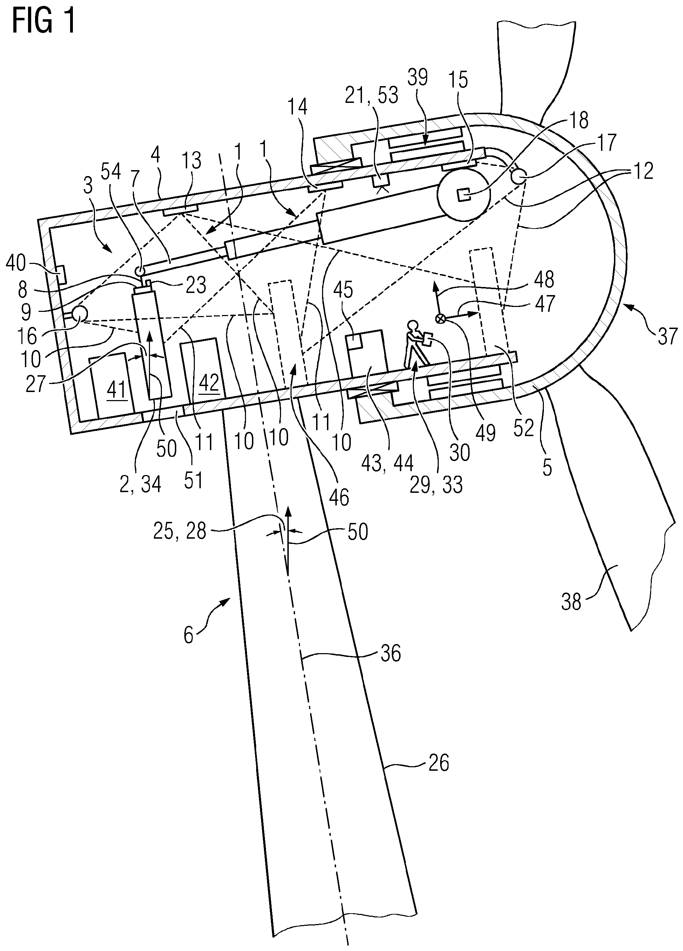

Fig. 1 shows a wind turbine 6 comprising a tower 26 having a longitudinal axis 36. A nacelle 4 is mounted to the tower 26 and rotatable about the longitudinal axis 36 of the tower 26. A rotor 37 comprises multiple rotor blades 38 mounted to a hub 5. The rotor 37 is rotatably supported by the nacelle 4. A generator 39 is driven by the rotor 37 for generating electrical energy.

The description primarily uses a local coordinate system that is affixed with respect to the nacelle 4. The axial direction 47 extends in parallel to the rotational axis of the rotor 37 of the wind turbine 6. It can run at an angle to the horizontal plane. The height direction 48 of the nacelle 4 is orthogonal to the axial direction 47 and would coincide with the vertical direction 50 in the global coordinate system, when the axial direction 47 would be tilted into the horizontal plane. The width direction 49 is orthogonal to the image plane in fig. 1 and orthogonal to both, the axial direction 49 and the height direction 48.

In particular, when constructing and/or a servicing the wind turbine 6, it can be necessary to move heavy loads, e.g., parts to be installed or replaced and/or tools, within the interior space 3 of the nacelle 4 and/or the hub 5. In the example shown in fig. 1, a large and heavy pitch cylinder is to be moved from the initial position 52 of the hub-end of the nacelle 4 to a target position 34, in which it is aligned with a service hatch.

From this position, the load 2 can then, e.g., be lowered onto an external platform to be picked up by an external crane or a helicopter. The movement can then be repeated in the opposite direction for a replacement part.

It should be noted, that the movement and guidance of the load could also be extended to allow for a movement into the part of the interior space 3 that extends into the hub 5 of the rotor 37, therefore, e.g., allowing for a movement of the pitch cylinder in the example directly to and from its installation position.

The actual lifting and movement of the load 2 is performed by a crane 7 that is installed in the nacelle 4. The load 2 is attached to a rope 8 of the crane via a connector 9, e.g., a hook. Without additional support, the load 2 could therefore start swinging during the movement, e.g., due to inertial forces and/or when the tower 26 of a floating wind turbine 6 is tilted due to waves, strong winds and/or inertial forces during a strong breaking of the wind turbine.

To provide additional support and guidance to the load, a guidance system 1 is used in the example, that comprises multiple taglines 10 to 12, tensioning members 13 to15 and deflection members 16, 17 to tension and guide the taglines 10 to 12, as well as a control unit 18 to control the tensioning members 13 to 15 and the crane 7. While the crane 7 is considered to be a part of the guidance system 1 in the example, it would also be possible, to, e.g., use a crane 7 that is permanently installed within the respective nacelle 4, while of the other components of the guidance system 1 are only installed when needed and reused for other wind turbines when they are no longer needed in the wind turbine 6.

To use the guidance system 1, at least one tagline 10-12 can be attached to the load 2 and/or the rope 8 and/or the connector 9 of the crane 7, while or before the load is attached to the crane 7. The load 2 can then be moved within the interior space 3 by actuating the crane 7, while the load 2 is guided by exerting a pulling force on the respective tagline 10-12. While the pulling force could in principle be directly provided by personal 29, e.g., the user 33 that is supervising in the move, the example uses the deflection members 16, 17, e.g., pulleys, to deflect the pulling force as necessary and tensioning members 13 to 15 that are automatically controlled during the movement by the control unit 18 of the guidance system 1 to provide the respective pulling force.

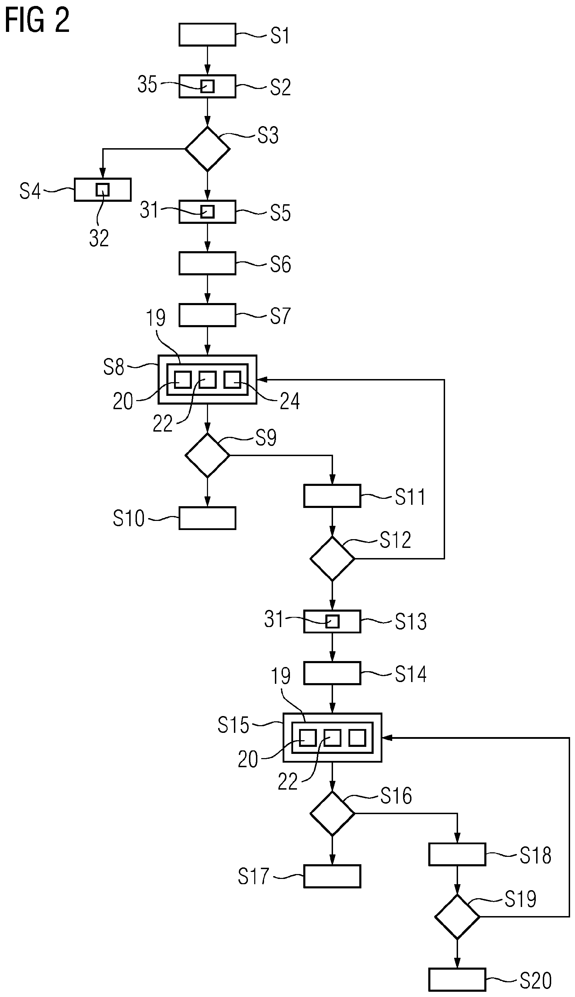

An exemplary method for moving the load 2 from the initial position 52 to the target position 34 will now be discussed with additional reference to the flowchart shown in figure 2.

In step S1, the user 33 registers the task at hand with the control unit 18 of the guidance system 1 using a mobile interface device 30, e.g., a tablet-PC. In the simplest case, the user can simply select the task from a list of the predefined movement and/or construction and/or servicing tasks to configure the system and to receive guidance for the respective task. It is however also possible, that the user 33 explicitly selects the load 2, e.g., by selecting a part number or scanning a barcode affixed to the load 2, the initial position 52 and the target position 34. The control unit 18 can then recall relevant information for this task, in particular including a model of the load 2 and the interior space 3, e.g., from a local data storage or from a server.

In step S2, the control unit 18 receives information concerning the current climatic conditions 35, e.g., the state of the see and the wind speed that can be expected in the course of the movement procedure. Such information can, e.g., be provided by a weather forecasting service.

In step S3, the control unit 18 determines, weather a movement of the load 2 to the target position 34 is possible in the current climatic conditions 35. For this purpose, a movement along one or multiple possible movement paths can be simulated and the forces that need to be exerted by the taglines 10 to 12 and therefore by the tensioning members 13 to 15 in a worst case scenario for the current climatic conditions 35 can be compared with the specifications of the tensioning members 13 to 15, the taglines 10 to 12 and the deflection members 16, 17, to test, whether the respective movement path lies safely withing given operating boundaries of these components.

If this is not the case, a warning message 32 can be output in step S4 and the method can end for now. It would however, e.g., be possible in this case, to notify the relevant personal 29, when the climatic conditions 35 change sufficiently to allow the planned move at a later point in time.

If a movement of the load 2 to the target position 34 is possible in the current climatic conditions 35, the interface device 30 is used to output an instruction message 31 to the user 33, that concerns a recommended configuration of the taglines 10-12, the tensioning members 13-15 and the respective deflection members 16, 17. In the example, the user 33 will be instructed to run the tagline 10 directly from the tensioning member 13 to the load 2 and to run the tagline 12 from the tensioning member 15 via the deflection member 17 to the load 2 as shown schematically in fig. 1, after the load 2 is attached to the crane 7 in the initial position 52.

The user 33 then follows these instructions by connecting the crane 7 to the load via the connector 9 at the end of the rope 8 in step S6 and by connecting the taglines 10, 12 in step S7 and confirms these actions at the interface device 30.

In step S8, sensor data 19 is acquired by the control unit 18. The acquired sensor data 19 concerns on the one hand an actual movement and an actual spatial pose of the load 2 and the nacelle 4 and on the other hand the presence of personal 29 and/or obstacles 41 to 43 in the vicinity of the planned movement path. For clarity's sake, only a few large obstacles 41 to 43, that can, e.g., consist of the electrical equipment like transformers, switch gear and control electronics, are shown in fig. 1. For such permanently installed obstacles, the position and dimensions of the respective obstacle 41 to 43 could also be known from a floor plan or virtual model of the interior space 3 stored and the control unit 18. The detection of obstacles could in this case, e.g., be used to detect movable obstacles like tools and/or unmounted components.

In the example, the sensor data 19 comprises image data 20 acquired by a LIDAR-system 21, measurement data 22 of an acceleration sensor 23 attached to the connector 9 of the crane 7 and of an angle sensor 24 measuring an angle of the rope 8 of the crane 7, and tilt information 24 that concerns a tilt 25 of the nacelle 4 of the wind turbine that is provided via the communication interface 45 of a controller 44 of the wind turbine and that is acquired via an acceleration sensor 40 that is permanently installed in the nacelle 4 in the example. Additionally operational parameters of the currently active tensioning members 13 and 14 are also acquired. In the example, the LIDAR-system 21 serves the dual purpose, of acquiring the position and spatial pose of the load 2 and for serving as a personal and obstacle sensor 53 that is used to determine whether obstacles and/or personal in operating area should lead to a stop of operations.

In step S9, a check is performed, whether the sensor data 9 and/or the operational parameters indicates the presence of personal 29 and/or an obstacle 41 to 43 in a given operational area, e.g., in the immediate vicinity of the planned movement path. If this is the case, the movement of the crane 7 and any increase of pulling forces by the tensioning members 13 to 15 is immediately stopped in step S10 and the user 33 is notified via the interface device 30 that a blockage occurred and personal and/or obstacles need to clear the operational area. Once the user 33 confirms, that the operational area is cleared, the method can be repeated from step S8 with the acquisition of new sensor data 19.

If the movement does not need to be stopped due to obstacles 41 to 43 and/or personal 29, the method proceeds to step S11, in which the crane 7 is controlled to move the load 2 along the planed movement path, while the currently used tensioning members 14 and 15 are controlled based on the sensor data 19 to guide the load 2.

In the example, the control unit 18 is operated in a mode of operation that is configured to control the spatial pose of the load. In particular, the tilt angle 27 should ideally be kept at a given reference tilt angle 28 in global coordinates, that corresponds to the tilt 25 of the tower 26 and therefore of the nacelle 4 of the wind turbine 6.

An angular error used for the control is determined by subtracting the reference tilt angle 28 corresponding to the tilt 25 given by the tilt information 24 from a current tilt angle 27 that is determined based on the direction of the rotational force measured by the acceleration sensor 23 attached to the connector 23 of the crane. When the determined angular error is successfully validated, as discussed below, the proportional and/or integral control of the pulling forces exerted by the active tensioning members 13, 15 can be performed based on this error signal.

To validated the angular error, the angular error is compared to the angle between the rope and of the height direction 48 of the nacelle 4, which is determined by the angle sensor 54 of the crane 7 and to the spatial pose of the load 2 in the local coordinate system of the nacelle 4, which is determined from the image data 20. If there is an inconsistency that exceeds a given threshold, the control can, e.g., be based on a majority vote of these inputs. It should be noted, that the high degree of redundancy described for the example is advantageous but not necessary. It is therefore, e.g., possible, to only use one or two of the discussed inputs for the control.

The previously discussed mode operation of the control unit 18 is advantageous, when the load is to be held in a specific orientation and/or when the external forces acting on the load change slowly over time. It is however limited by the fact, that external forces acting on the load 2 can only be compensated in this mode, once an angular error is detected.

In certain use cases, e.g., in climatic conditions that include a choppy sea and/or quickly changing wind speeds and/or directions, e.g., wind gusts, an alternate mode of operation using an alternate control scheme can be used to control the tensioning members 13 to 15 in step S11. In this alternative mode, a respective measure for a current or predicted acceleration of the load 2 can be estimated based on the sensor data 19. The tensioning members 13 to 15 can then be controlled to at least partially compensate that estimated force.

During the movement of the load 2, it is periodically checked in step S12, whether the load 2 has reached the intermediate position 46. This can be determined based on the position of the crane 7 and/or by determining the position of the load 2, e.g., based on the image data 20. It should be noted, that the load 2 is lowered to the floor of the nacelle 4 in the intermediate position 46 in the example, to allow for an easy modification of the configuration of the taglines 10 to 12.

While the intermediate position 46 is not yet reached, the method is repeated from step S8. Once the intermediate position 46 is reached, the method continues with step S13, wherein a further instruction message 31 is provided to the user 33 via the interface device 30. This instruction message 31 instructs the user to disconnected the tagline 12 and therefore the tensioning member 15 from the load 2 and to instead connect the tagline 11 and therefore the tensioning a member 14 at the same position of the load 2. It also instructs the user to change the routing of the tagline 10. Instead of directly routing the tagline 10 from the tensioning members 13 to the load 2, as previously, this tagline 10 should now be routed via the deflection member 16.

Based on of this instruction message 31, the user 33 reconfigures the taglines 10 to 12 in step S14 and then confirm via the interface device 30, that the movement of the load towards the target position 34 can continue.

It should be noted, that the example assumes fixed positions for all the tensioning members 13 to 15 and deflection members 16 and 17 for simplicity's sake. Since only two of the tensioning members 13 to 15 and a single one of the tensioning members 16, 17 are used at the same time in the example, it would however also be possible, to move the tensioning an/or deflection members 13 to 17 to different mounting positions as needed, e.g., to dedicated hardpoints of the canopy of the nacelle 4. Instructions for such a reconfiguration could also be included in the instruction message 31 given in step S13.

The steps S15 to S19 that are performed during the further movement essentially correspond to the previously discussed steps S8 to S12. In step S15 new sensor data 19 is acquired, as already discussed in the context of step S8.

In step S16 a check is performed, whether the sensor data 9 indicates the presence of personal 29 and/or an obstacle 41 to 43 in a given operational area. In this case, the movement of the crane 7 and any increase of pulling forces by the tensioning members 13 to 15 is immediately stopped in step S17, as previously discussed for the steps S9 and S10.

Otherwise, the method proceeds to step S18, in which the crane 7 is controlled to move the load 2 along the planed movement path, while the currently used tensioning members 13 and 14 are controlled based on the sensor data 19 to guide the load 2, as already discussed in the context of step S11.

During the movement of the load, it is periodically checked in step S19, whether the load 2 has reached the target position 34. Once the target position 34 is reached, the user 33 can be informed of this fact in step S20 via the interface device 30 and can optionally be provided with additional instructions, e.g., for transferring the load to the outside of the nacelle 4 via the service hatch 51 and/or for disconnecting the remaining taglines 10, 11 and/ or the crane 7 from the load 2, once the load 2 is lowered. It is also possible, to transfer the control of the crane 7 and/or the tensioning members 13 to 15 to the user 33, e.g., to allow for a manual fine positioning.

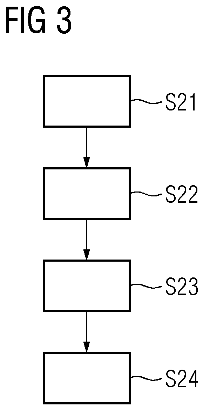

Fig. 3 discloses an exemplary flow chart of a method for operating the wind turbine 6 shown in fig. 1 and for feeding electrical energy to an electricity grid. The wind turbine 6 is, in particular, a floating offshore wind turbine 6.

In step S21, the previously discussed guidance system 1 is used in the wind turbine 6, to move the load 2, e.g., by performing the method discussed with reference to fig. 2. The use of the guidance system 1 can, in particular, be part of the construction and/or a servicing operation of the wind turbine 6. The load can, e.g., be a component of the wind turbine 6 that is to be installed or replaced. The guidance system 1 can remain installed on the wind turbine 6 during the following steps or it can be uninstalled once step S21 is completed.

In step S22 the wind turbine 6 is operated to generate electrical energy via the generator 39.

In step S23 at least part of the generated electrical energy is transmitted to an energy receiving arrangement. The energy receiving arrangement can, in particular, be not positioned in international waters and can be positioned onshore or within a 12-mile-zone of a respective sovereign national state over which the respective state has jurisdiction.

In step S24, the electrical energy is supplied to an onshore electrical utility grid and/or to an electrical storage.

It should be noted, that at least part of the electrical energy could additionally or alternatively be transformed into chemical energy, e.g., into hydrogen by electrolysis, in particular in the wind turbine 6 itself or at an offshore location, and then, e.g., be transferred to an onshore utility grid, as already discussed in the general part of the description.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A guidance system for guiding a load (2) within an interior space (3) of a nacelle (4) and/or a hub (5) of a wind turbine (6) when the load (2) is attached to a crane (7) within the interior space (3), in particular by a rope (8) of the crane (7) and/or by a connector (9) of the crane (7) that is attached to a rope (8) of the crane (7),
wherein the guidance system (1) is comprising
at least one tagline (10-12), which is attached or attachable to the load (2) and/or the rope (8) of the crane (7) and/or the connector (9) of the crane (7) to guide the load (2), and
wherein the guidance system is further comprising
a respective tensioning member (13-15) for at least one of the taglines (10-12), which is attached or is attachable to the respective tagline (10-12) and is designed to exert a pulling force on the respective tagline (10-12), and/or
a respective deflection member (16, 17) for at least one of the taglines (10-12), in particular a pulley, for deflecting the respective tagline (10-12).

2. The guidance system according to claim 1, wherein the guidance system (1) additionally comprises a control unit (18), wherein the control unit (18) is configured
to acquire sensor data (19) concerning an actual movement and/or an actual spatial pose of the load (2) and/or the nacelle (4) respectively, and
to control at least one of the tensioning members (13-15) and/or the crane (7) based on the acquired sensor data (7).

3. The guidance system according to claim 2, wherein the sensor data (19) is or comprises image data (20), in particular image data acquired by a camera, a 3D-scanner and/or a LIDAR-system (21), and/or measurement data (22) of at least one acceleration sensor (23) attached to the load (2) and/or the rope (8) and/or the connector (9) of the crane (7) and/or an angle sensor (54) measuring an angle of the rope (8) of the crane (7).

4. The guidance system according to claim 2 or 3, wherein the sensor data (9) comprises a tilt information (24) concerning a tilt (25) of a tower (26) of the wind turbine (6) carrying the nacelle (4) and/or of the nacelle (4).

5. The guidance system according to one of the claims 2 to 4, wherein the control unit (18) is configured to determine a respective measure for a current or predicted acceleration of the load (2) based on the sensor data (19), and to control the tensioning member (13-15) or at least one of the tensioning members (13-15) to at least partially compensate that force in at least one mode of operation of the control unit (18).

6. The guidance system according to one of the claims 2 to 5, wherein the control unit is configured to determine a measure for a current tilt angle (27) of the load (2) based on the sensor data(19) , and to control the tensioning member (13-15) or at least one of the tensioning members (13-15) based on an angular error between the current tilt angle (27) and a given reference tilt angle (28) in the mode of operation and/or in at least one further mode of operation of the control unit (18).

7. The guidance system according to one of the claims 2 to 6,
wherein the control unit (18) is configured to stop a movement of the crane (7) and/or to stop an increase of a pulling force of the respective tensioning member (13-15),
when the sensor data (19) and/or additional sensor data acquired by at least one personal and/or obstacle sensor (53) and/or at least one operational parameter of the respective tensioning member (13-15) indicates a presence of personal (29) and/or of an obstacle (41-43) in a given operational area of the interior space (3).

8. The guidance system according to one of the claims 2 to 7, wherein the guidance system (1) comprises an interface device (30), wherein the control unit (18) is configured to output an instruction message (31) and/or a warning message (32) to a user (33) of the guidance system (1) via the interface device,
wherein the instruction message (31) concerns a recommended configuration of the taglines (10-12) and/or the respective tensioning member (13-15) and/or the respective deflection member (16, 17), and/or
wherein the warning message (32) is given, when a movement of the load (2) to a given target position (34) is not possible in the current climatic conditions (35).

9. A wind turbine (6) comprising a tower (26) having a longitudinal axis (36), a nacelle (4) being mounted rotatably about a longitudinal axis (36) of the tower (26) to the tower (26), a rotor (37) having at least one rotor blade (38), the rotor (37) being rotatably supported by the nacelle (4), a generator (39) being rotatable by the rotor (37) for generating electrical energy, and
a guidance system (1) according to one of the preceding claims.

10. The wind turbine according to claim 9, comprising
a sensor (40), in particular an acceleration sensor, in particular mounted to the nacelle (4) or the tower (26), and a controller (44),
wherein the controller is configured to determine the or a tilt information (24) concerning a tilt of the tower (26) and/or of the nacelle (4) based on output data of ethe sensor (40), and
a communication interface (45) for providing the tilt information (24) to the control unit (18) of the or a control unit (18) of the guidance system (1).

11. A method for moving a load (2) within an interior space (3) of a nacelle (4) and/or a hub (5) of a wind turbine (6), comprising the following steps:
providing the load (2) in the interior space (3);
attaching at least one tagline (10-12) to the load (2) and/or to a rope (8) of the crane (7) and/or to a connector (9) attached to the rope (8), while the load (2) is attached to a crane (7) that is installed within the nacelle (4) and/or before the load (2) is attached to the crane (7); and
moving the load (2) within the interior space (3) by actuating the crane (7), while the load (2) is guided by exerting a pulling force on the respective tagline (10-12).

12. The method according to claim 11, further comprising the steps:
attaching at least one of the taglines (10-12) to ta respective tensioning member (13-15) mounted within the interior space (3), and
exerting the pulling force on the respective tagline (10-12) by the respective tensioning member (13-15).

13. The method according to claim 11 or 12,
deflecting at least one of the taglines (10-12) by a respective deflection member (16, 17),
exerting the respective pulling force on a section of the respective tagline (10-12) that is separated from the load (2) by the deflection member (16, 17), causing the deflection member (16, 17) to redirect the pulling force.

14. The method according to one of the claims 11 to 12, wherein the step of moving the load within the interior space comprises
moving the load (2) to an intermediate position (46),
modifying a configuration of at least one of the taglines (10-12) and/or at least one tensioning and/or deflection member (13-17), while the load (2) is in the intermediate position (46), and
continuing to move the load (2) from the intermediate position (46).

15. A method for operating a wind turbine (6), in particular an offshore wind turbine (6), further in particular a floating offshore wind turbine (6), and/or for feeding electrical and/or chemical energy to an electricity and/or chemical grid, the method comprising the following steps:
operating a wind turbine (6), wherein the wind turbine (6) is an embodiment of the wind turbine (6) according to claim 9 or 10 and/or constructed and/or serviced using the method for moving a load (2) according to one of the claims 11 to 14 and/or using a guidance system (1) according to one of the claims 1 to 8;
generating, by the wind turbine (6), electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting, at least partially, the electrical power, the electrical energy, and/or the chemical energy to an energy receiving arrangement, in particular wherein
the receiving arrangement is not positioned in international waters, is positioned onshore, and/or is positioned within a 12-miles-zone of a respective sovereign national state over which the respective state has jurisdiction; and
supplying, at least partially, the electrical power, the electrical energy, and/or the chemical energy to an electrical and/or chemical utility grid, in particular to an onshore electrical and/or chemical utility grid and/or chemical/electrical storage.
